# FASCICULE DE BREVET EUROPEEN

(11) **EP 4 182 139 B1**
(45) Date de publication et mention de la délivrance du brevet: **03.09.2025**
(21) Numéro de dépôt: 21742843.2
(22) Date de dépôt: 20.07.2021
(51) Int. Cl.: B29C 45/14

(54) **PROCEDE COMPRENANT LA REALISATION D'UN ENSEMBLE DE RECOUVREMENT POUR HABITACLE DE VEHICULE**
VERFAHREN UMFASSEND DIE KONSTRUKTION EINER ABDECKANORDNUNG FÜR EINEN FAHRZEUGINNENRAUM
METHOD COMPRISING THE CONSTRUCTION OF A COVERING ASSEMBLY FOR A VEHICLE PASSENGER COMPARTMENT

(30) Priorité: 20.07.2020 FR 2007603
(43) Date de publication de la demande: 24.05.2023
(73) Titulaire: SMRC Automotive Holdings Netherlands B.V., 1101 BA Amsterdam (NL)
(72) Inventeur: HOCHART, Olivier, 62980 NOYELLES LES VERMELLES (FR); BONY, Claire, 59128 FLERS EN ESCREBIEUX (FR); BROCHOT, Benjamin, 59000 LILLE (FR); PEYNOT, Jane, 59000 LILLE (FR)
(74) Mandataire: Ipsilon Strasbourg
(86) Numéro de dépôt international: PCT/EP2021/070218
(87) Numéro de publication internationale: WO 2022/018062

(56) Documents cités:
- WO-A2-01/42052
- DE-A1- 102007 009 384

## Description

La présente invention se rapporte aux matériaux de recouvrement et leurs procédés de productions et plus particulièrement aux procédés de production de tels matériaux de recouvrement pour les surfaces de composants d'habitacle de véhicules.

Dans les véhicules, les éléments structurels des habitacles sont classiquement recouverts d'un ou de plusieurs revêtements qui participent à l'esthétique de l'intérieur du véhicule mais également au confort tant visuel que tactile des surfaces de l'habitacle. La publication WO 01/42052 illustre ainsi un exemple de superposition de couche de matières sur une structure rigide pour la réalisation d'un habillage intérieur de véhicule. Dans le cadre d'une diversification des motifs de surface, une solution consiste à utiliser un revêtement dont la surface extérieure présente un schéma ornemental imprimé particulier. Une alternative consiste à opérer une combinaison de différentes pièces de matières assemblées entre elles de façon à réaliser un revêtement qui présente la forme d'un patchwork de diverses matières.

Une autre solution consiste en la réalisation d'un revêtement à partir d'une combinaison de deux matériaux dans laquelle une première matière est insérée dans l'épaisseur d'une seconde matière. Une technique actuellement mise en œuvre pour réaliser cette solution consiste disposer à l'intérieur d'un moule, une superposition d'un premier matériau à insérer avec un second matériau destiné à recevoir le premier matériau. Le premier matériau est positionné contre la face intérieure d'un moule de sorte que l'insertion est opérée sous l'effet de l'injection d'une matière dans le moule. Le second matériau est ainsi repoussé et étiré contre la surface du moule autour du premier matériau de sorte que le premier matériau se retrouve inséré dans l'épaisseur du second matériau et/ou enveloppé par le second matériau. Le revêtement ainsi obtenu est produit sous la forme d'un assemblage des premier et second matériaux positionnés de même niveau pour réaliser la surface extérieure du revêtement. Une telle solution présente toutefois un défaut de finition sur la surface du revêtement ainsi formé, notamment au niveau de la jonction entre les deux matériaux où des discontinuités de surface existent. En effet, lors de l'opération d'injection, le second matériau repoussé contre la surface du moule est susceptible de rencontrer des difficultés à épouser parfaitement les contours périphériques du premier matériau. Cette difficulté est rencontrée en particulier à distance des buses d'injection du moule, là où la matière injectée tend à voir sa viscosité augmenter sous l'effet du refroidissement de la matière injectée au contact avec les différents matériaux et donc à voir sa propension à repousser le second matériau contre la surface du moule et à remplir les espaces disponibles disparaître. De même, la matière injectée est susceptible de rencontrer des perturbations dans son écoulement en raison de la présence d'éléments insérés ou de contraintes d'extensibilité des matériaux.

La présente invention a pour but de pallier cet inconvénient en proposant une solution de production qui permette la réalisation d'un ensemble de recouvrement présentant une continuité de surface au niveau de ces jonctions entre deux matériaux différents qui réalisent la surface extérieure de cet ensemble de recouvrement tout en autorisant l'utilisation de matériaux identiques à ceux utilisés dans le cadre des procédés existants.

L'invention concerne un procédé comprenant une réalisation d'un ensemble de recouvrement pour revêtement d'au moins une partie d'un habitacle de véhicule, cet ensemble de recouvrement présentant une première face, dit intérieure, destinée à être positionnée sur la surface d'une pièce à recouvrir et une seconde face, dite extérieure, destinée à être orientée vers l'intérieur de l'habitacle du véhicule, caractérisé en ce que la réalisation de cet ensemble 1 de recouvrement comprend au moins :
- une étape d'assemblage par superposition d'au moins trois feuillets de matériaux comprenant notamment :
   - un feuillet extérieur positionné du côté de la face extérieure de l'ensemble de recouvrement et destiné à réaliser une première partie de la face extérieure de l'ensemble de recouvrement, ce feuillet extérieur comportant des ouvertures traversantes de l'épaisseur du feuillet,
   - un feuillet intérieur positionné du côté de la face intérieure de l'ensemble de recouvrement, le feuillet intérieur étant formé d'un matériau de souplesse supérieure à celle du matériau du feuillet extérieur,
   - un feuillet de matériau liant disposé entre le feuillet extérieur et le feuillet intérieur,
- une étape de positionnement dans un moule de la superposition des feuillets de sorte que le feuillet extérieur soit positionné, directement ou indirectement, contre la surface d'une paroi poreuse du moule,
- une étape d'aspiration du feuillet intérieur de l'ensemble de recouvrement au niveau d'au moins une portion de la face extérieure de l'ensemble de recouvrement qui n'est pas couverte par le feuillet extérieur, de sorte que, au travers d'au moins une ouverture traversante du feuillet extérieur, la surface extérieure du feuillet intérieur se positionne contre la paroi du moule, au moins de niveau avec la surface extérieure du feuillet extérieur, l'aspiration étant opérée au travers de la paroi poreuse du moule.

L'invention concerne également un ensemble de recouvrement pour revêtement intérieur de véhicule caractérisé en ce qu'il est obtenu par un procédé selon l'invention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

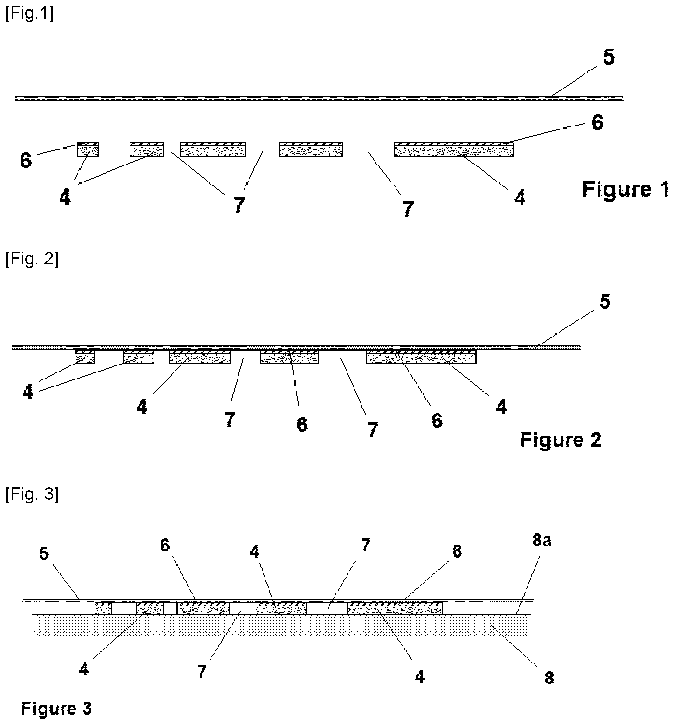

[Fig.1] est une représentation schématique d'un exemple de différents feuillets pour la réalisation d'un ensemble de recouvrement par un procédé selon l'invention,
[Fig.2] est une représentation schématique d'un exemple de superposition de différents feuillets dans le cadre d'un procédé de réalisation d'un ensemble de recouvrement selon l'invention,
[Fig.3] est une représentation schématique d'un exemple de positionnement dans un moule d'une superposition de différents feuillets dans le cadre d'une première variante du procédé de réalisation d'un ensemble de recouvrement selon l'invention,

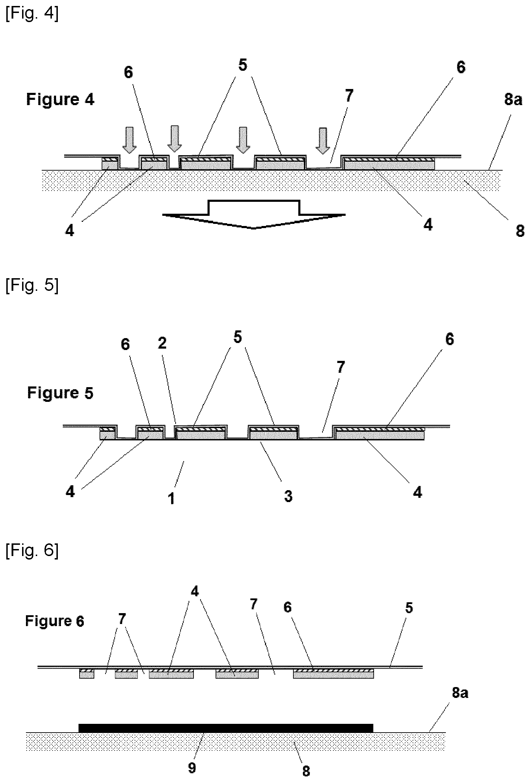

[Fig.4] est une représentation schématique d'un exemple d'aspiration du feuillet intérieur dans le cadre d'une première variante du procédé de réalisation d'un ensemble de recouvrement selon l'invention,
[Fig.5] est une représentation schématique d'un exemple d'ensemble de recouvrement obtenu par une première variante du procédé selon l'invention,
[Fig.6] est une représentation schématique d'un exemple de différents feuillets intervenant dans le cadre d'une seconde variante du procédé de réalisation d'un ensemble de recouvrement selon l'invention faisant intervenir un feuillet intercalaire.

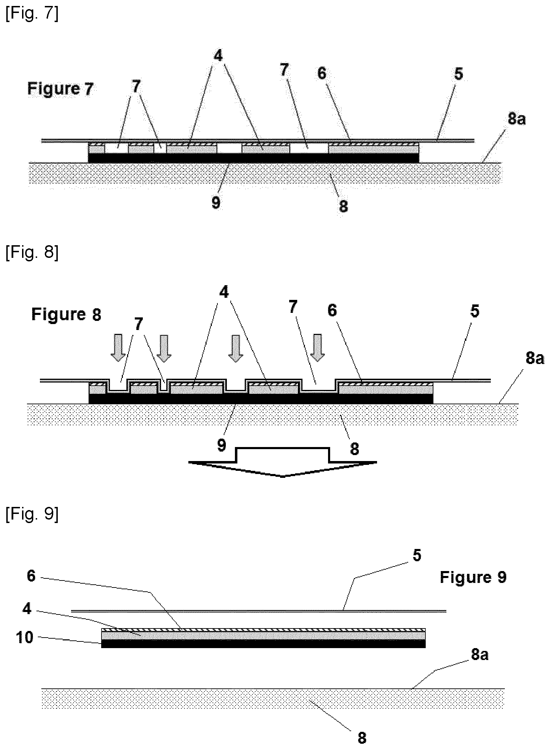

[Fig.7] est une représentation schématique d'un exemple de positionnement dans un moule d'une superposition de différents feuillets dans le cadre d'une seconde variante du procédé de réalisation d'un ensemble de recouvrement selon l'invention faisant intervenir un feuillet intercalaire,
[Fig.8] est une représentation schématique d'un exemple d'aspiration du feuillet intérieur dans le cadre d'une seconde variante du procédé de réalisation d'un ensemble de recouvrement selon l'invention faisant intervenir un feuillet intercalaire,
[Fig.9] est une représentation schématique d'un exemple de différents feuillets intervenant dans le cadre d'une troisième variante du procédé de réalisation d'un ensemble de recouvrement selon l'invention faisant intervenir un feuillet intermédiaire.

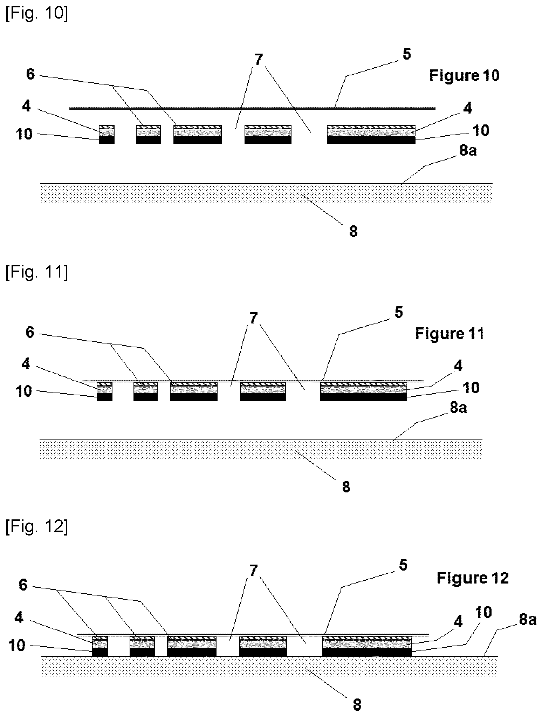

[Fig.10] est une représentation schématique d'un exemple de positionnement des ouvertures traversantes aux niveaux de certains des feuillets dans le cadre d'une troisième variante du procédé de réalisation d'un ensemble de recouvrement selon l'invention faisant intervenir un feuillet intermédiaire.
[Fig.11] est une représentation schématique d'un exemple de positionnement du feuillet intérieur par rapport aux autres feuillets dans le cadre d'une troisième variante du procédé de réalisation d'un ensemble de recouvrement selon l'invention faisant intervenir un feuillet intermédiaire.
[Fig.12] est une représentation schématique d'un exemple de positionnement dans un moule d'une superposition de différents feuillets dans le cadre d'une troisième variante du procédé de réalisation d'un ensemble de recouvrement selon l'invention faisant intervenir un feuillet intermédiaire.

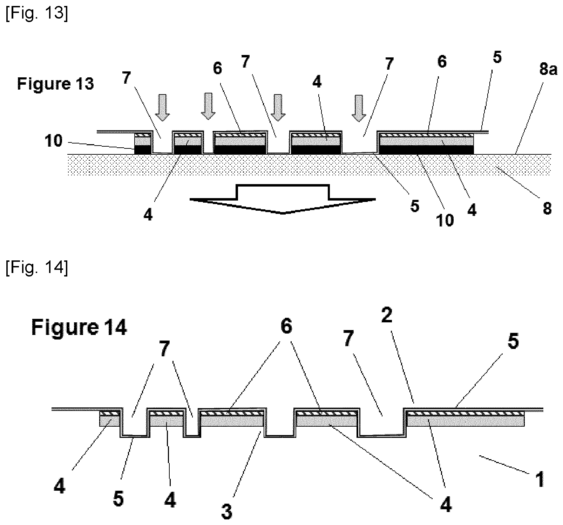

[Fig.13] est une représentation schématique d'un exemple d'aspiration du feuillet intérieur dans le cadre d'une troisième variante du procédé de réalisation d'un ensemble de recouvrement selon l'invention faisant intervenir un feuillet intermédiaire.
[Fig.14] est une représentation schématique d'un exemple d'ensemble de recouvrement obtenu par une troisième variante du procédé selon l'invention.

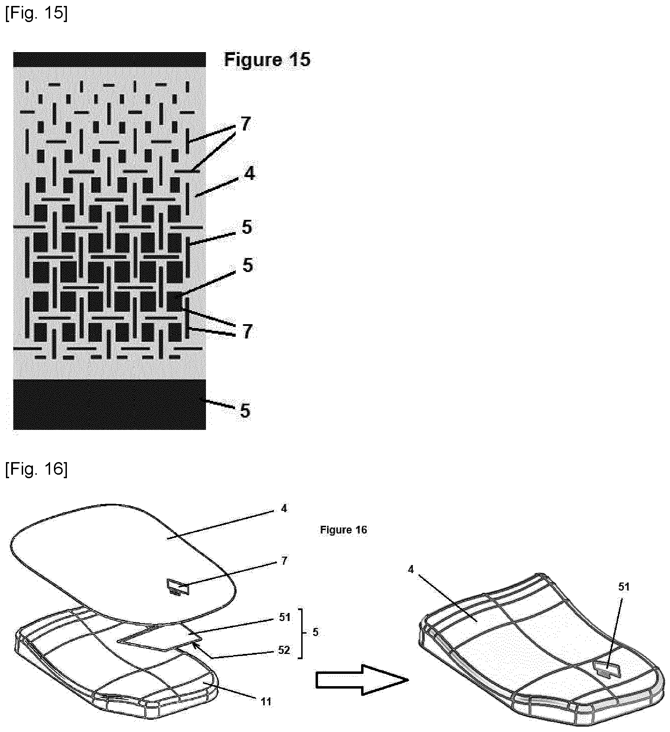

[Fig.15] est une représentation schématique d'un exemple de face extérieure d'un ensemble de recouvrement selon l'invention comprenant un feuillet intérieur superposé par un feuillet extérieur comportant un motif réalisé par différentes ouvertures traversantes.
[Fig.16] est une représentation schématique d'un exemple d'ensemble de recouvrement selon l'invention dans le cas où un feuillet intérieur est réalisé par la combinaison d'une fine couche rigide fixée sur un support souple.

L'invention se rapporte à un procédé comprenant une réalisation d'un ensemble 1 de recouvrement pour revêtement d'au moins une partie d'un habitacle de véhicule, cet ensemble 1 de recouvrement présentant une première face 2, dit intérieure, destinée à être positionnée sur la surface d'une pièce à recouvrir et une seconde face 3, dite extérieure, destinée à être orientée vers l'intérieur de l'habitacle du véhicule, caractérisé en ce que la réalisation de cet ensemble 1 de recouvrement comprend au moins :
- une étape d'assemblage par superposition d'au moins trois feuillets de matériaux 4, 5, 6 comprenant notamment :
   - un feuillet extérieur 4 positionné du côté de la face extérieure 3 de l'ensemble 1 de recouvrement et destiné à réaliser une première partie de la face extérieure 3 de l'ensemble de recouvrement, ce feuillet extérieur 4 comportant des ouvertures traversantes 7 de l'épaisseur du feuillet 4,
   - un feuillet intérieur 5 positionné du côté de la face intérieure de l'ensemble 1 de recouvrement, le feuillet intérieur 5 étant formé d'un matériau de souplesse supérieure à celle du matériau du feuillet extérieur 4,
   - un feuillet de matériau liant 6 disposé entre le feuillet extérieur 4 et le feuillet intérieur 5,
- une étape de positionnement dans un moule 8 de la superposition des feuillets 4, 5, 6 de sorte que le feuillet extérieur 4 soit positionné, directement ou indirectement, contre la surface d'une paroi poreuse 8a du moule 8,
- une étape d'aspiration du feuillet intérieur 5 de l'ensemble de recouvrement au niveau d'au moins une portion de la face extérieure 3 de l'ensemble 1 de recouvrement qui n'est pas couverte par le feuillet extérieur 4, de sorte que, au travers d'au moins une ouverture traversante 7 du feuillet extérieur 4, la surface extérieure du feuillet intérieur 5 se positionne contre la paroi du moule 8, au moins de niveau avec la surface extérieure du feuillet extérieur 4, l'aspiration étant opérée au travers de la paroi poreuse 8a du moule 8.

Il convient de relever que les qualificatifs « intérieur » et « extérieur » attribués aux faces et feuillets de l'ensemble 1 de recouvrement sont définis en fonction de la position et/ou de l'orientation de l'élément concerné de l'ensemble 1 de recouvrement par rapport au complexe formé par l'ensemble 1 de recouvrement en combinaison avec la structure support destinée à recevoir l'ensemble 1 de recouvrement, la structure support correspondant à au moins une partie d'un habitacle de véhicule. Aussi, le qualificatif « extérieur » se rapporte aux éléments de l'ensemble 1 de recouvrement positionnés et/ou orientés en direction de l'extérieur du complexe associant l'ensemble 1 de recouvrement à sa structure support, c'est-à-dire dirigée vers l'habitacle du véhicule ou la face d'aspect visible par un utilisateur ou occupant dans l'habitacle du véhicule. Inversement, le qualificatif « intérieur » se rapporte aux éléments de l'ensemble 1 de recouvrement positionnés et/ou orientés en direction de l'intérieur ou de l'épaisseur du complexe réunissant l'ensemble 1 de recouvrement avec la structure support.

A l'inverse de procédés existants qui font intervenir une injection de matière sur la face intérieure 2 de l'ensemble 1 de revêtement pour opérer un déplacement du feuillet intérieur 5 au travers des ouvertures 7 du feuillet extérieur 4, le procédé de l'invention permet la réalisation d'un ensemble 1 de recouvrement similaire sans nécessiter l'adjonction d'un quelconque matériau additionnel au niveau de l'une de ses faces pour que la configuration finale de l'ensemble 1 de recouvrement soit obtenue. Le procédé selon l'invention repose sur l'aspiration du feuillet intérieur 5 pour être positionné en partie au travers du feuillet extérieur 4. En exerçant une aspiration au travers de la paroi poreuse 8a du moule et donc en opérant un vide au niveau d'une ouverture traversante 7 du feuillet extérieur 4, c'est-à-dire entre la paroi 8a du moule 8 et le feuillet intérieur 5, le positionnement du feuillet intérieur 5 plaqué contre la paroi 8a du moule 8 s'en trouve optimisé.

A titre d'exemple, le moule 8 utilisé dans le cadre de la mise en œuvre du procédé selon l'invention est un moule 8 dont au moins une paroi 8a comprend des orifices aménagés ou une porosité intrinsèque associé à un mécanisme d'aspiration. Ce type de moule correspond à un moule dit de transformation ou de thermoformage.

Cette amélioration se traduit notamment par une jonction continue entre le feuillet extérieur 4 et le feuillet intérieur 5 au niveau de la partie de l'ouverture traversante 7 en appui contre la paroi 8a du moule 8. Sous l'effet de l'aspiration, le feuillet intérieur 5 se plaque au travers de l'ouverture traversante 7 sur l'ensemble de l'épaisseur du feuillet extérieur 4 qui forme le pourtour de l'ouverture traversante 7. Ce plaquage du feuillet intérieur 5 réalise ainsi un positionnement qui s'adapte de façon optimisée au bord périphérique de l'ouverture traversante 7 situé au niveau de la face extérieure du feuillet extérieur 4 de façon à obtenir, au niveau de la surface extérieure 3 de l'ensemble 1 de recouvrement, un orifice de l'ouverture traversante 7 qui soit intégralement obturé par le feuillet intérieur 5.

Il convient de relever que la souplesse particulière du feuillet extérieur 4 par rapport au feuillet intérieur 5 autorise une déformation qui permet, lors de son positionnement, d'épouser parfaitement le pourtour de l'ouverture traversante 7 situé au niveau de la face extérieure du feuillet extérieur 4 et ainsi empêcher que ne se forme, au niveau du pourtour de l'orifice de l'ouverture traversante 7, un quelconque défaut de jonction entre le feuillet intérieur 5 et le feuillet extérieur 4 laissant subsister la présence d'un manque de matière susceptible d'identifier la présence d'une ouverture traversante 7.

Selon un exemple correspondant à une variante particulière du procédé de l'invention, le feuillet intérieur 5 présente une superficie supérieure à la superficie du feuillet extérieur 4. Cet arrangement particulier permet d'assurer une couverture optimale de la face intérieure du feuillet extérieur 4 par le feuillet intérieur 5 de sorte que lors de l'étape d'aspiration du feuillet intérieur 5, le risque de perte d'aspiration se trouve facilement écarté.

Selon un exemple correspondant à une variante particulière du procédé de l'invention, le feuillet intérieur 5 présente une superficie dont la surface et les dimensions sont plus restreintes que celles du feuillet extérieur 4. En effet, la surface extérieure du feuillet intérieur 5 a uniquement vocation à être visible au niveau de chacune des ouvertures traversantes 7 du feuillet extérieur 4. Aussi, le feuillet extérieur 4 est susceptible de présenter des dimensions qui correspondent sensiblement aux dimensions de chacune des ouvertures traversantes 7 du feuillet extérieur 4 tout en étant au moins très légèrement supérieure de façon éviter tout risque de perte d'aspiration en cas de défaut de positionnement du feuillet intérieur 5 par rapport aux ouvertures traversantes 7 du feuillet extérieur 4.

Le feuillet de matériau liant 6 est uniquement positionné au niveau de la surface intérieure du feuillet extérieur 4, entre les différentes ouvertures traversantes 7 du feuillet extérieur 4 de façon à permettre au feuillet intérieur 4 de demeurer fixé à la face intérieure du feuillet extérieur 4 tout en étant déformable au niveau des ouvertures traversantes 7 du feuillet extérieur 4. Ce feuillet de matériau liant 6 est susceptible d'être réalisé sous la forme d'un liant, d'une colle ou d'une résine déposé par enduction ou par pulvérisation.

Selon un exemple correspondant à une variante particulière du procédé de l'invention, la réalisation de l'ensemble 1 de recouvrement comprend, préalablement à l'étape d'assemblage du feuillet intérieur 5 avec le matériau liant 6 sur la face intérieure du feuillet extérieur 5, une étape de chauffage d'au moins une partie du feuillet intérieur 5. Cette étape de chauffage préalable a pour effet d'augmenter la malléabilité et donc la souplesse du feuillet intérieur 5. Aussi, cette étape de chauffage permet de faciliter, une fois les trois feuillets 4, 5, 6 assemblés, la déformation du feuillet intérieur 5 au cours de l'étape d'aspiration. Cette déformation est améliorée par le chauffage du feuillet 5 qui optimise les propriétés de ductilité du matériau formant ce feuillet intérieur 5 pour qu'il traverse l'ouverture traversante 7 du feuillet extérieur 4 en épousant parfaitement le pourtour de l'ensemble des parois de cette ouverture traversante 7.

Selon un exemple correspondant à une autre variante particulière du procédé de l'invention susceptible d'être combinée à avec la variante particulière précédemment mentionnée, la réalisation de l'ensemble 1 de recouvrement comprend, préalablement à l'étape d'aspiration, une étape de chauffage de la superposition des au moins trois feuillets 4, 5, 6. Dans le cadre de cette variante, le chauffage de la superposition des trois feuillets permet, d'une part, d'optimiser les propriétés de déformation du matériau qui forme le feuillet intérieur 5 et, d'autre part, de placer le feuillet de matériau liant 6 dans un intervalle de températures susceptible de maximiser ses propriétés d'adhérence aux deux autres feuillets, extérieur 4 et intérieur 5.

Selon un exemple correspondant à une autre variante particulière du procédé de l'invention susceptible d'être combinée avec les variantes particulières précédemment mentionnées, la réalisation de l'ensemble 1 de recouvrement comprend, préalablement à l'étape d'assemblage par superposition :
- une étape de dépose du feuillet de matériau liant 6 sur la face intérieure du feuillet extérieur 4,
- une étape de découpe d'au moins une ouverture traversante 7 selon un motif souhaité de l'ensemble réalisé par le feuillet extérieur 4 et le feuillet de matériau liant 6.

Ces étapes réalisées préalablement à l'assemblage par superposition du troisième feuillet intérieur 5 permettent le positionnement d'un matériau liant 6 au niveau des seules portions pleines de la surface intérieure du feuillet extérieure 4 et non pas en vis-à-vis des ouvertures traversantes 7 du feuillet extérieure 4. Aussi, lors de la superposition du feuillet intérieur 5 pour réaliser l'ensemble 1 de recouvrement de l'invention, les portions de la surface du feuillet intérieur 5 positionnées en vis-à-vis des ouvertures traversantes 7 ne sont pas en contact avec un matériau liant susceptible d'altérer leur interaction avec la surface intérieure du moule 8. Ces étapes réalisées préalablement à l'assemblage par superposition du troisième feuillet intérieur 5 permettent de réaliser un ensemble propre associant le feuillet extérieur 4 et le feuillet de matériau liant 6, c'est-à-dire sans qu'il n'y ait un débordement de matériau liant 6 au-delà des strictes portions pleines de la surface intérieure du feuillet extérieure 4. L'ensemble associant le feuillet extérieur 4 et le feuillet de matériau liant 6 est ainsi suffisamment propre pour être prêt à une utilisation efficace lors de la superposition du feuillet intérieur 5.

Selon un exemple correspondant à une autre variante particulière du procédé de l'invention susceptible d'être combinée avec les variantes particulières précédemment mentionnées, préalablement à l'étape d'assemblage par superposition et à l'étape de découpe d'au moins une ouverture traversante 7, le procédé comprend au moins une étape de positionnement d'un feuillet intermédiaire 10 sur la surface extérieure du feuillet extérieur 4. Le feuillet intermédiaire 10 est fixé de façon détachable sur la surface extérieure du feuillet extérieur 4. Lors de l'étape de découpe d'au moins une ouverture traversante 7, la découpe est effectuée selon un motif souhaité au travers de l'ensemble réalisé par le feuillet extérieur 4 ; le feuillet de matériau liant 6 et le feuillet intermédiaire 10. Après découpe des ouvertures traversantes 7, le feuillet intérieur 5 est assemblé par superposition sur le feuillet de matériau liant 6. L'ensemble réalisé par le feuillet intérieur 5, le feuillet de matériau liant 6, le feuillet extérieur 4 et le feuillet intermédiaire 10 est alors positionné dans un moule 8 de sorte que le feuillet intermédiaire 10 soit positionné contre la surface d'une paroi poreuse 8a du moule 8. Lors de l'étape d'aspiration, le feuillet intérieur 5 est aspiré au travers des ouvertures traversantes 7 pour se plaquer contre la paroi 8a du moule 8, de niveau avec la surface extérieure du feuillet intermédiaire 10 en appui contre la paroi poreuse 8a du moule 8. Aussi, le feuillet intérieur 5 est aspiré au-delà de la surface extérieure du feuillet extérieur 4 et dépasse de cette surface extérieure selon une hauteur qui correspond à l'épaisseur du feuillet intermédiaire 10 en position contre la surface extérieure du feuillet extérieur 4. Après l'étape d'aspiration, une fois que l'ensemble réalisé par le feuillet intérieur 5, le feuillet de matériau liant 6, le feuillet extérieur 4 et le feuillet intermédiaire 10 est retiré du moule 8, le feuillet intermédiaire 10 est détaché de la surface extérieure du feuillet extérieur 4 de sorte que l'ensemble réalisé par le feuillet intérieur 5, le feuillet de matériau liant 6 et le feuillet extérieur 4 est arrangé pour que les portions du feuillet intérieur 5 positionnées au travers des ouvertures traversantes 7 réalisent un relief par rapport à la surface du feuillet extérieur 4.

Selon un exemple correspondant à une autre variante particulière du procédé de l'invention susceptible d'être combinée avec les variantes particulières précédemment mentionnées, au moins une partie de la surface de la paroi poreuse 8a du moule 8 contre laquelle le feuillet extérieur 4 est disposé lors de l'étape de positionnement des feuillets 4, 5, 6, présente un grain pour former, lors de l'étape d'aspiration, au moins en partie, un relief complémentaire porté par la surface extérieure 3 de l'ensemble 1 de recouvrement et formé, d'une part, par la surface extérieure du feuillet extérieur 4 et, d'autre part, par au moins une partie de la surface extérieure du feuillet intérieur 5 qui traverse une ouverture 7 du feuillet intérieur 4. Sous l'effet de l'aspiration, les surfaces extérieures respectives des feuillets extérieur et intérieur sont plaquées contre la surface de la paroi poreuse 8a du moule 8. Cette mise en pression de la surface extérieure 3 de l'ensemble 1 de recouvrement conduit cette surface extérieure 3 à s'adapter à la surface de la paroi poreuse 8a du moule en épousant les différentes variations de surface et aspérités de cette paroi 8a. Cette propension de la surface extérieure 3 de l'ensemble 1 de recouvrement à adopter une forme et un relief complémentaire de la surface de la paroi poreuse 8a du moule est également susceptible d'être amélioré par le choix des matériaux utilisés pour réaliser chacun des feuillets 4, 5, 6 de l'ensemble 1 de recouvrement. Cette capacité de la surface extérieure 3 de l'ensemble 1 de recouvrement à épouser la paroi poreuse 8a est susceptible d'être optimisée par un apport de chaleur au niveau d'au moins une partie de la surface extérieure 3 de l'ensemble 1 de recouvrement de sorte que les propriétés de souplesse des matières des feuillets 4, 5, 6 de l'ensemble 1 de recouvrement s'en trouve augmentée. Suite à un apport de chaleur, la mémoire de forme et le maintien de la complémentarité de relief au niveau de la surface extérieure 3 de l'ensemble 1 de recouvrement sont notamment obtenus lors du refroidissement de l'ensemble 1 de recouvrement de sorte que celui-ci opère une rigidification des matières des feuillets 4, 5, 6 qui réalisent sa structure et conserve la forme adoptée lorsque sa structure était réchauffée.

Selon un exemple correspondant à une variante particulière du procédé de l'invention qui forme une alternative à la variante particulière détaillée précédemment mais demeure susceptible d'être combinée avec les autres variantes particulières précédemment mentionnées, lors de l'étape de positionnement de la superposition des feuillets 4, 5, 6 dans le moule 8, un feuillet intercalaire 9 est positionné entre la surface de la paroi poreuse 8a du moule 8 et la surface extérieure 3 de l'ensemble 1 de recouvrement, le feuillet intercalaire 9 présentant un grain pour former, au moins en partie, un relief complémentaire porté par la surface extérieure 3 de l'ensemble 1 de recouvrement et formé, d'une part, par la surface extérieure du feuillet extérieur 4 et, d'autre part, par au moins une partie de la surface extérieure du feuillet intérieur 5 qui traverse une ouverture 7 du feuillet intérieur 5. Le feuillet intercalaire 9 positionné contre la surface de la paroi poreuse 8a présente un arrangement qui permet de ne pas empêcher l'aspiration de l'ensemble 1 de recouvrement en appui indirect contre la paroi poreuse 8a du moule. Un tel arrangement du feuillet intercalaire 9 est susceptible d'être obtenu par un dimensionnement restreint de la surface du feuillet intercalaire 9 par rapport à la surface de la paroi poreuse 8a et/ou à la surface de l'ensemble 1 de recouvrement, de sorte que l'aspiration de l'ensemble 1 de recouvrement contre la paroi poreuse 8a s'effectue notamment par la périphérie du feuillet intercalaire 9. Un tel arrangement du feuillet intercalaire 9 est également susceptible d'être réalisé grâce à une structure du feuillet qui soit poreuse, grillagée ou perforée de sorte que l'aspiration puisse également être réalisée au travers de la structure même du feuillet intercalaire 9. Cette structure poreuse/grillagée/perforée du feuillet intercalaire 9 permet également d'opérer une aspiration d'un ensemble 1 de recouvrement dont la surface présente une dimension inférieure à celle du feuillet intercalaire 9. Sous l'effet de l'aspiration, les surfaces extérieures respectives des feuillets extérieur et intérieur sont plaquées contre la surface du feuillet intercalaire 9. La pression exercée sous l'effet du vide au niveau de la surface extérieure 3 de l'ensemble 1 de recouvrement conduit cette surface extérieure à épouser les différentes variations de surface et aspérités du feuillet intercalaire 9. Il convient de relever que dans cette variante de mise en œuvre également, la propension de la surface extérieure 3 de l'ensemble 1 de recouvrement à adopter une forme et un relief complémentaire du feuillet intercalaire 9 positionné contre la paroi poreuse 8a du moule est susceptible d'être amélioré par le choix des matériaux utilisés dans la réalisation de chacun des feuillets 4, 5, 6 de l'ensemble 1 de recouvrement. La capacité de la surface extérieure 3 de l'ensemble 1 de recouvrement à épouser le feuillet intercalaire 9 est également susceptible d'être optimisée par un apport de chaleur au niveau d'au moins une partie de la surface extérieure 3 de l'ensemble 1 de recouvrement de sorte que les propriétés de souplesse des matières des feuillets 4, 5, 6 de l'ensemble 1 de recouvrement s'en trouve augmentée. Suite à un apport de chaleur, la mémoire de forme et le maintien de la complémentarité de relief au niveau de la surface extérieure 3 de l'ensemble 1 de recouvrement sont notamment obtenus lors du refroidissement de l'ensemble 1 de recouvrement de sorte que celui-ci opère une rigidification des matières des feuillets 4, 5, 6 qui réalisent sa structure et conserve la forme adoptée lorsque sa structure était réchauffée.

Selon un exemple correspondant à une autre variante particulière du procédé de l'invention susceptible d'être combinée avec les variantes particulières précédemment mentionnées, au moins un des deux feuillets, intérieur 5 et extérieur 4, est formé par une superposition d'au moins deux couches de matières différentes réalisée préalablement à l'étape d'assemblage des feuillets 4, 5, 6 de l'ensemble 1 de recouvrement. Cette combinaison de deux matières sous la forme de deux couches superposées et disposées dans l'épaisseur d'un même feuillet permet de profiter des propriétés propres aux matières de chacune des couches pour permettre des interactions ou fonctions spécifiques au niveau des différentes faces, intérieure et extérieure, d'un même feuillet, c'est-à-dire, par exemple, de façon interne à l'ensemble 1 de recouvrement avec le feuillet de matériau liant 6 ou, par exemple, de façon externe à l'ensemble 1 de recouvrement au niveau de la surface intérieure 2 de l'ensemble 1 réalisée par la surface intérieure du feuillet intérieur 5 ou de la surface extérieure 3 de l'ensemble 1 réalisée par les surfaces extérieures respectives du feuillet intérieur 5 et du feuillet extérieur 4.

Selon un exemple spécifique de la variante précédemment énoncées du procédé de l'invention, le feuillet extérieur 4 est formé par un assemblage de différents matériaux. Selon une spécificité complémentaire, ces différents matériaux sont de type naturel et sensiblement rigides tels que de la pierre ou une plusieurs essences de bois. De plus, le feuillet extérieur 4 est susceptible d'être formé par un assemblage effectué par couture, collage, soudure ou tout autre technique connue adaptée aux propriétés particulières des matériaux de ce feuillet 4. Selon un exemple particulier, le feuillet extérieur 4 est réalisé par la combinaison d'une lame de bois ou d'un laminage d'une fine couche de bois fixé sur un support souple susceptible d'être réalisé par un film ou un textile, tissé ou non-tissé.

Selon un exemple spécifique similaire à celui de la variante précédemment énoncées du procédé de l'invention, le feuillet intérieur 5 est formé par un assemblage de différents matériaux. Selon une spécificité complémentaire, ces différents matériaux sont de type naturel et sensiblement rigides tels que de la pierre ou une plusieurs essences de bois. De plus, le feuillet intérieur 5 est susceptible d'être formé par un assemblage effectué par couture, collage, soudure ou tout autre technique connue adaptée aux propriétés particulières des matériaux de ce feuillet intérieur 5. Selon un exemple particulier, le feuillet intérieur 5 est réalisé par la combinaison d'une feuille de pierre ou d'un laminage d'une fine couche de pierre 51 fixé sur un support souple 52 susceptible d'être réalisé par un film ou un textile, tissé ou non-tissé. Il convient de relever que lorsque le feuillet intérieur 5 comprend au moins un matériau sensiblement rigide, tel que du bois ou de la pierre, la souplesse du feuillet 5 est alors moins importante que pour un feuillet intérieur 5 réalisé uniquement à partir de matériaux souples de type film ou textile. Aussi, lors de l'étape d'aspiration du feuillet intérieur 5 de l'ensemble de recouvrement au niveau d'au moins une portion de la face extérieure 3 de l'ensemble 1 de recouvrement qui n'est pas couverte par le feuillet extérieur 4, la rigidité du matériau naturel 51 qui compose le feuillet intérieur 5 se trouve compensé par la souplesse du matériau de type film ou textile 52, de sorte que le feuillet intérieur 5 demeure apte à être déformé pour positionner sa surface extérieure contre la paroi poreuse 8a du moule 8, au moins de niveau avec la surface extérieure du feuillet extérieur 4.

Selon un exemple spécifique de la variante précédemment énoncées du procédé de l'invention, le feuillet intérieur 5 est formé par la superposition d'au moins une couche d'élastomère thermoplastique oléfinique destinée à réaliser la surface extérieure du feuillet intérieur 5 et d'une mousse destinée à réaliser la surface intérieure du feuillet intérieur 5 et de l'ensemble 1 de recouvrement. Selon un exemple de mise en œuvre, la mousse est susceptible d'être réalisée à partir d'un polypropylène.

Selon un exemple correspondant à une autre variante particulière du procédé de l'invention susceptible d'être combinée avec les variantes particulières précédemment mentionnées, le procédé comprend une étape d'assemblage d'au moins une partie de l'ensemble 1 de recouvrement avec une structure support. Cette étape d'assemblage est susceptible d'être opérée par gainage, par collage, par surmoulage ou par injection de la structure support au niveau de la surface intérieure 2 de l'ensemble 1 de recouvrement.

Selon une autre variante particulière du procédé de l'invention susceptible d'être combinée avec les variantes particulières précédemment mentionnées, le procédé comprend une étape d'injection de matière au niveau de la surface intérieure 2 de l'ensemble 1 de recouvrement. Selon un exemple spécifique de cette variante du procédé, l'injection est effectuée au niveau de la surface intérieure 2 d'un ensemble 1 de recouvrement disposé seul dans un moule dédié. Selon un autre exemple spécifique de cette variante du procédé, l'injection est effectuée entre la surface intérieure 2 d'un ensemble 1 de recouvrement et un second élément tel qu'une structure support, ces deux éléments étant disposés conjointement dans un moule dédié. Selon un cas particulier de cet exemple, le matériau injecté est de type expansible tel une mousse ou une résine.

L'invention concerne également un ensemble de recouvrement pour revêtement intérieur de véhicule caractérisé en ce qu'il est obtenu par un procédé selon l'invention.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé comprenant une réalisation d'un ensemble (1) de recouvrement pour revêtement d'au moins une partie d'un habitacle de véhicule, cet ensemble (1) de recouvrement présentant une première face (2), dite intérieure, destinée à être positionnée sur la surface d'une pièce à recouvrir et une seconde face (3), dite extérieure, destinée à être orientée vers l'intérieur de l'habitacle du véhicule, **caractérisé en ce que** la réalisation de cet ensemble (1) de recouvrement comprend au moins :
- une étape d'assemblage par superposition d'au moins trois feuillets de matériaux (4, 5, 6) comprenant notamment :
• un feuillet extérieur (4) positionné du côté de la face extérieure (3) de l'ensemble (1) de recouvrement et destiné à réaliser une première partie de la face extérieure (3) de l'ensemble de recouvrement, ce feuillet extérieur (4) comportant des ouvertures traversantes (7) de l'épaisseur du feuillet (4),
• un feuillet intérieur (5) positionné du côté de la face intérieure de l'ensemble (1) de recouvrement, le feuillet intérieur (5) étant formé d'un matériau de souplesse supérieure ou égale à celle du matériau du feuillet extérieur (4),
• un feuillet de matériau liant (6) disposé entre le feuillet extérieur (4) et le feuillet intérieur (5),
- une étape de positionnement dans un moule (8) de la superposition des feuillets (4, 5, 6) de sorte que le feuillet extérieur (4) soit positionné, directement ou indirectement, contre la surface d'une paroi poreuse (8a) du moule (8),
- une étape d'aspiration du feuillet intérieur (5) de l'ensemble de recouvrement au niveau d'au moins une portion de la face extérieure (3) de l'ensemble (1) de recouvrement qui n'est pas couverte par le feuillet extérieur (4), de sorte que, au travers d'au moins une ouverture traversante (7) du feuillet extérieur (4), la surface extérieure du feuillet intérieur (5) se positionne contre la paroi du moule (8), au moins de niveau avec la surface extérieure du feuillet extérieur (4), l'aspiration étant opérée au travers de la paroi poreuse (8a) du moule (8).

2. Procédé selon la revendication 1, **caractérisé en ce que** la réalisation de l'ensemble (1) de recouvrement comprend, préalablement à l'étape d'assemblage du feuillet intérieur (5) avec le matériau liant (6) sur la face intérieure du feuillet extérieur (5), une étape de chauffage d'au moins une partie du feuillet intérieur (5).

3. Procédé selon la revendication 1, **caractérisé en ce que** la réalisation de l'ensemble (1) de recouvrement comprend, préalablement à l'étape d'aspiration, une étape de chauffage de la superposition des au moins trois feuillets (4, 5, 6).

4. Procédé selon une des revendications 1 à 3, **caractérisé en ce que** le feuillet intérieur (5) présente une superficie supérieure à la superficie du feuillet extérieur (4).

5. Procédé selon une des revendications 1 à 3, **caractérisé en ce que** le feuillet intérieur (5) présente une superficie dont la surface et les dimensions sont plus restreintes que celles du feuillet extérieur (4).

6. Procédé selon une des revendications 1 à 5, **caractérisé en ce que** la réalisation de l'ensemble (1) de recouvrement comprend, préalablement à l'étape d'assemblage par superposition :
- une étape de dépose du feuillet de matériau liant (6) sur la face intérieure du feuillet extérieur (4),
- une étape de découpe d'au moins une ouverture traversante (7) selon un motif souhaité de l'ensemble réalisé par le feuillet extérieur (4) et le feuillet de matériau liant (6).

7. Procédé selon une des revendications 1 à 6, **caractérisé en ce qu'**au moins une partie de la surface de la paroi poreuse (8a) du moule (8) contre laquelle le feuillet extérieur (4) est disposé lors de l'étape de positionnement des feuillets (4, 5, 6), présente un grain pour former, lors de l'étape d'aspiration, au moins en partie, un relief complémentaire porté par la surface extérieure (3) de l'ensemble (1) de recouvrement et formé, d'une part, par la surface extérieure du feuillet extérieur (4) et, d'autre part, par au moins une partie de la surface extérieure du feuillet intérieur (5) qui traverse une ouverture (7) du feuillet intérieur (4).

8. Procédé selon une des revendications 1 à 6, **caractérisé en ce que**, lors de l'étape de positionnement de la superposition des feuillets (4, 5, 6) dans le moule (8), un feuillet intercalaire (9) est positionné entre la surface de la paroi poreuse (8a) du moule (8) et la surface extérieure (3) de l'ensemble (1) de recouvrement, le feuillet intercalaire (9) présentant un grain pour former, au moins en partie, un relief complémentaire porté par la surface extérieure (3) de l'ensemble (1) de recouvrement et formé, d'une part, par la surface extérieure du feuillet extérieur (4) et, d'autre part, par au moins une partie de la surface extérieure du feuillet intérieur (5) qui traverse une ouverture (7) du feuillet intérieur (5).

9. Procédé selon les caractéristiques de la seule revendication 6 ou selon les caractéristiques combinées des revendications 6 et 7 ou 6 et 8, **caractérisé en ce que**, le procédé comprend au moins :
- une étape de positionnement d'un feuillet intermédiaire (10) détachable sur la surface extérieure du feuillet extérieur (4), préalablement à l'étape d'assemblage par superposition et à l'étape de découpe d'au moins une ouverture traversante (7),
- une étape de découpe d'au moins une ouverture traversante (7) selon un motif souhaité de l'ensemble réalisé par le feuillet intermédiaire (10), le feuillet extérieur (4) et le feuillet de matériau liant (6).

10. Procédé selon une des revendications 1 à 9, **caractérisé en ce qu'**au moins un des deux feuillets, intérieur (5) et extérieur (4), est formé par une superposition d'au moins deux couches de matières différentes réalisée préalablement à l'étape d'assemblage des feuillets (4, 5, 6) de l'ensemble (1) de recouvrement.

11. Procédé selon la revendication 10, **caractérisé en ce que** le feuillet intérieur (5) est formé par la superposition d'au moins une couche d'élastomère thermoplastique oléfinique destinée à réaliser la surface extérieure du feuillet intérieur (5) et d'une mousse destinée à réaliser la surface intérieure du feuillet intérieur (5) et de l'ensemble (1) de recouvrement.

12. Procédé selon une des revendications 1 à 11, **caractérisé en ce que** le procédé comprend une étape d'assemblage d'au moins une partie de l'ensemble (1) de recouvrement avec une structure support.

13. Procédé selon une des revendications 1 à 12, **caractérisé en ce que** le procédé comprend une étape d'injection de matière au niveau de la surface intérieure (2) de l'ensemble (1) de recouvrement.

## Patentansprüche

1. Verfahren, welches eine Herstellung einer Abdeckanordnung (1) zur Verkleidung wenigstens eines Teils eines Fahrzeuginnenraums umfasst, wobei diese Abdeckanordnung (1) eine erste Seite (2), Innenseite genannt, die dazu bestimmt ist, auf der Oberfläche eines abzudeckenden Stücks positioniert zu werden, und eine zweite Seite (3), Außenseite genannt, die dazu bestimmt ist, dem Inneren des Innenraums des Fahrzeugs zugewandt zu sein, aufweist, **dadurch gekennzeichnet, dass** die Herstellung dieser Abdeckanordnung (1) mindestens umfasst:
- einen Schritt des Zusammenfügens von mindestens drei Blättern von Materialien (4, 5, 6) durch Übereinanderlegen, die insbesondere umfassen:
• ein äußeres Blatt (4), das auf der Seite der Außenseite (3) der Abdeckanordnung (1) positioniert ist und dazu bestimmt ist, einen ersten Teil der Außenseite (3) der Abdeckanordnung herzustellen, wobei dieses äußere Blatt (4) Öffnungen (7) aufweist, welche die Dicke des Blattes (4) durchqueren,
• ein inneres Blatt (5), das auf der Seite der Innenseite der Abdeckanordnung (1) positioniert ist, wobei das innere Blatt (5) aus einem Material mit einer Flexibilität ausgebildet ist, die größer oder gleich derjenigen des Materials des äußeren Blattes (4) ist,
• ein Blatt aus Bindematerial (6), das zwischen dem äußeren Blatt (4) und dem inneren Blatt (5) angeordnet ist,
- einen Schritt der Positionierung der übereinanderliegenden Blätter (4, 5, 6) in einer Form (8), derart, dass das äußere Blatt (4) direkt oder indirekt gegen die Oberfläche einer porösen Wand (8a) der Form (8) positioniert wird,
- einen Schritt der Ansaugung des inneren Blattes (5) der Abdeckanordnung an mindestens einem Abschnitt der Außenseite (3) der Abdeckanordnung (1), der nicht von dem äußeren Blatt (4) bedeckt ist, so dass, durch mindestens eine Durchgangsöffnung (7) des äußeren Blattes (4), die Außenfläche des inneren Blattes (5) sich mindestens auf gleicher Höhe mit der Außenfläche des äußeren Blattes (4) gegen die Wand der Form (8) positioniert, wobei die Ansaugung durch die poröse Wand (8a) der Form (8) hindurch vorgenommen wird.

2. Verfahren nach Anspruch 1, **dadurch gekennzeichnet, dass** die Herstellung der Abdeckanordnung (1), vor dem Schritt des Zusammenfügens des inneren Blattes (5) mit dem Bindematerial (6) auf der Innenseite des äußeren Blattes (5), einen Schritt der Erwärmung mindestens eines Teils des inneren Blattes (5) umfasst.

3. Verfahren nach Anspruch 1, **dadurch gekennzeichnet, dass** die Herstellung der Abdeckanordnung (1) vor dem Schritt der Ansaugung einen Schritt der Erwärmung der übereinanderliegenden mindestens drei Blätter (4, 5, 6) umfasst.

4. Verfahren nach einem der Ansprüche 1 bis 3, **dadurch gekennzeichnet, dass** das innere Blatt (5) eine Oberfläche aufweist, die größer als die Oberfläche des äußeren Blattes (4) ist.

5. Verfahren nach einem der Ansprüche 1 bis 3, **dadurch gekennzeichnet, dass** das innere Blatt (5) eine Oberfläche aufweist, deren Flächeninhalt und Abmessungen geringer als diejenigen des äußeren Blattes (4) sind.

6. Verfahren nach einem der Ansprüche 1 bis 5, **dadurch gekennzeichnet, dass** die Herstellung der Abdeckanordnung (1) vor dem Schritt des Zusammenfügens durch Übereinanderlegen umfasst:
- einen Schritt der Aufbringung des Blattes aus Bindematerial (6) auf die Innenseite des äußeren Blattes (4),
- einen Schritt des Ausschneidens mindestens einer Durchgangsöffnung (7) gemäß einem gewünschten Muster aus der Anordnung, die von dem äußeren Blatt (4) und dem Blatt aus Bindematerial (6) gebildet wird.

7. Verfahren nach einem der Ansprüche 1 bis 6, **dadurch gekennzeichnet, dass** wenigstens ein Teil der Fläche der porösen Wand (8a) der Form (8), gegen die das äußere Blatt (4) im Schritt der Positionierung der Blätter (4, 5, 6) angeordnet wird, eine Körnung aufweist, um im Schritt der Ansaugung wenigstens zum Teil ein komplementäres Relief zu bilden, das von der Außenfläche (3) der Abdeckanordnung (1) getragen wird und einerseits von der Außenfläche des äußeren Blattes (4) und andererseits von wenigstens einem Teil der Außenfläche des inneren Blattes (5), der eine Öffnung (7) des inneren Blattes (4) durchquert, gebildet wird.

8. Verfahren nach einem der Ansprüche 1 bis 6, **dadurch gekennzeichnet, dass** im Schritt der Positionierung der übereinanderliegenden Blätter (4, 5, 6) in der Form (8) ein Einlageblatt (9) zwischen der Oberfläche der porösen Wand (8a) der Form (8) und der Außenfläche (3) der Abdeckanordnung (1) positioniert wird, wobei das Einlageblatt (9) eine Körnung aufweist, um wenigstens zum Teil ein komplementäres Relief zu bilden, das von der Außenfläche (3) der Abdeckanordnung (1) getragen wird und einerseits von der Außenfläche des äußeren Blattes (4) und andererseits von wenigstens einem Teil der Außenfläche des inneren Blattes (5), der eine Öffnung (7) des inneren Blattes (5) durchquert, gebildet wird.

9. Verfahren gemäß den Merkmalen von Anspruch 6 allein oder gemäß den kombinierten Merkmalen der Ansprüche 6 und 7 oder 6 und 8, **dadurch gekennzeichnet, dass** das Verfahren mindestens umfasst:
- einen Schritt der Positionierung eines ablösbaren Zwischenblattes (10) auf der Außenfläche des äußeren Blattes (4) vor dem Schritt des Zusammenfügens durch Übereinanderlegen und dem Schritt des Ausschneidens mindestens einer Durchgangsöffnung (7),
- einen Schritt des Ausschneidens mindestens einer Durchgangsöffnung (7) gemäß einem gewünschten Muster aus der Anordnung, die von dem Zwischenblatt (10), dem äußeren Blatt (4) und dem Blatt aus Bindematerial (6) gebildet wird.

10. Verfahren nach einem der Ansprüche 1 bis 9, **dadurch gekennzeichnet, dass** mindestens eines der zwei Blätter, das innere (5) und/oder das äußere (4), durch ein Übereinanderlegen mindestens zweier Schichten aus unterschiedlichen Materialien gebildet wird, das vor dem Schritt des Zusammenfügens der Blätter (4, 5, 6) der Abdeckanordnung (1) erfolgt.

11. Verfahren nach Anspruch 10, **dadurch gekennzeichnet, dass** das innere Blatt (5) durch das Übereinanderlegen mindestens einer Schicht aus olefinischem thermoplastischem Elastomer, die dazu bestimmt ist, die Außenfläche des inneren Blattes (5) herzustellen, und eines Schaumstoffs, der dazu bestimmt ist, die Innenfläche des inneren Blattes (5) und der Abdeckanordnung (1) herzustellen, gebildet wird.

12. Verfahren nach einem der Ansprüche 1 bis 11, **dadurch gekennzeichnet, dass** das Verfahren einen Schritt des Zusammenfügens wenigstens eines Teils der Abdeckanordnung (1) mit einer Tragstruktur umfasst.

13. Verfahren nach einem der Ansprüche 1 bis 12, **dadurch gekennzeichnet, dass** das Verfahren einen Schritt des Einspritzens von Material an der Innenfläche (2) der Abdeckanordnung (1) umfasst.

## Claims

1. Method comprising the production of a covering assembly (1) for lining at least a part of a vehicle passenger compartment, this covering assembly (1) having a first face (2), referred to as inner face, intended to be positioned on the surface of a component to be covered, and a second face (3), referred to as outer face, intended to be oriented toward the interior of the vehicle passenger compartment, **characterized in that** the production of this covering assembly (1) comprises at least:
- a step of assembly by superposition of at least three sheets of material (4, 5, 6) notably comprising:
• an outer sheet (4) positioned on the side of the outer face (3) of the covering assembly (1) and intended to produce a first part of the outer face (3) of the covering assembly, this outer sheet (4) having throughopenings (7) passing through the thickness of the sheet (4),
• an inner sheet (5) positioned on the side of the inner face of the covering assembly (1), the inner sheet (5) being formed of a material with a flexibility greater than or equal to that of the material of the outer sheet (4),
• a sheet of binder material (6) disposed between the outer sheet (4) and the inner sheet (5),
- a step of positioning the superposition of the sheets (4, 5, 6) in a mould (8) such that the outer sheet (4) is positioned, directly or indirectly, against the surface of a porous wall (8a) of the mould (8),
- a step of suctioning the inner sheet (5) of the covering assembly at at least one portion of the outer face (3) of the covering assembly (1) that is not covered by the outer sheet (4), such that, through at least one through-opening (7) in the outer sheet (4), the outer surface of the inner sheet (5) is positioned against the wall of the mould (8), at least level with the outer surface of the outer sheet (4), the suctioning being effected through the porous wall (8a) of the mould (8).

2. Method according to Claim 1, **characterized in that** the production of the covering assembly (1) comprises, prior to the step of assembling the inner sheet (5) with the binder material (6) on the inner face of the outer sheet (5), a step of heating at least a part of the inner sheet (5).

3. Method according to Claim 1, **characterized in that** the production of the covering assembly (1) comprises, prior to the suctioning step, a step of heating the superposition of the at least three sheets (4, 5, 6).

4. Method according to one of Claims 1 to 3, **characterized in that** the inner sheet (5) has a surface area greater than the surface area of the outer sheet (4).

5. Method according to one of Claims 1 to 3, **characterized in that** the inner sheet (5) has a surface area whose surface and dimensions are more constrained than those of the outer sheet (4).

6. Method according to one of Claims 1 to 5, **characterized in that** the production of the covering assembly (1) comprises, prior to the step of assembly by superposition:
- a step of depositing the sheet of binder material (6) on the inner face of the outer sheet (4),
- a step of cutting out at least one through-opening (7), according to a desired pattern, from the assembly produced by the outer sheet (4) and the sheet of binder material (6).

7. Method according to one of Claims 1 to 6, **characterized in that** at least a part of the surface of the porous wall (8a) of the mould (8), against which part the outer sheet (4) is disposed during the step of positioning the sheets (4, 5, 6), has a texture in order to at least partially form, during the suctioning step, a complementary relief borne by the outer surface (3) of the covering assembly (1) and formed, for the one part, by the outer surface of the outer sheet (4) and, for the other part, by at least a part of the outer surface of the inner sheet (5) that passes through an opening (7) in the inner sheet (4).

8. Method according to one of Claims 1 to 6, **characterized in that**, during the step of positioning the superposition of the sheets (4, 5, 6) in the mould (8), a spacer sheet (9) is positioned between the surface of the porous wall (8a) of the mould (8) and the outer surface (3) of the covering assembly (1), the spacer sheet (9) having a texture in order to at least partially form a complementary relief borne by the outer surface (3) of the covering assembly (1) and formed, for the one part, by the outer surface of the outer sheet (4) and, for the other part, by at least a part of the outer surface of the inner sheet (5) that passes through an opening (7) in the inner sheet (5).

9. Method according to the features of only Claim 6 or according to the combined features of Claims 6 and 7 or 6 and 8, **characterized in that** the method comprises at least:
- a step of positioning a detachable intermediate sheet (10) on the outer surface of the outer sheet (4), prior to the step of assembly by superposition and to the step of cutting out at least one through-opening (7),
- a step of cutting out at least one through-opening (7), according to a desired pattern, from the assembly produced by the intermediate sheet (10), the outer sheet (4) and the sheet of binder material (6).

10. Method according to one of Claims 1 to 9, **characterized in that** at least one of the two sheets, inner sheet (5) and outer sheet (4), is formed by a superposition of at least two layers of different materials which is produced prior to the step of assembling the sheets (4, 5, 6) of the covering assembly (1).

11. Method according to Claim 10, **characterized in that** the inner sheet (5) is formed by the superposition of at least one layer of olefinic thermoplastic elastomer intended to produce the outer surface of the inner sheet (5) and of a foam intended to produce the inner surface of the inner sheet (5) and of the covering assembly (1).

12. Method according to one of Claims 1 to 11, **characterized in that** the method comprises a step of assembling at least a part of the covering assembly (1) with a support structure.

13. Method according to one of Claims 1 to 12, **characterized in that** the method comprises a step of injecting material at the inner surface (2) of the covering assembly (1).
